# EUROPÄISCHE PATENTSCHRIFT

(11) **EP 2 952 789 B1**
(45) Veröffentlichungstag und Bekanntmachung des Hinweises auf die Patenterteilung: **27.02.2019**
(21) Anmeldenummer: 15168658.1
(22) Anmeldetag: 21.05.2015
(51) Int. Cl.: F16K 1/36, F16K 17/04

(54) **SICHERHEITSVENTIL**
SAFETY VALVE
SOUPAPE DE SÉCURITÉ

(30) Priorität: 03.06.2014 DE 102014210431
(43) Veröffentlichungstag der Anmeldung: 09.12.2015
(73) Patentinhaber: Leser GmbH & Co. KG, 20537 Hamburg (DE)
(72) Erfinder: Ulrich Haacke,, 21073 Hamburg (DE)
(74) Vertreter: Patentanwälte Vollmann & Hemmer Lindfeld Partnerschaft mbB

(56) Entgegenhaltungen:
- DE-A1- 2 627 233
- DE-U1-202008 014 555
- DE-U1-202011 109 263
- GB-A- 2 137 736

## Beschreibung

Die Erfindung betrifft ein Sicherheitsventil mit einem Ventilsitz und einem vorgespannten Dichtkörper.

Bei bekannten Sicherheitsventilen wird ein Dichtteller im geschlossenen Zustand des Sicherheitsventils an einen Ventilsitz mit einer bestimmten Haltekraft angepresst. Überschreitet ein Druck eines gegen den Dichtteller wirkenden Mediums einen bestimmten Grenzdruck, welcher eine Kraft auf den Dichtteller größer als die definierte Haltekraft bewirkt, so wird der Dichtteller durch das Medium vom Ventilsitz weggedrückt, und das Medium kann durch das Sicherheitsventil entweichen, bis der Druck derart stark abgesunken ist, dass die durch den Druck entstehende Kraft auf den Dichtteller kleiner als die Haltekraft ist, so dass sich das Dichtelement wieder dichtend an den Ventilsitz anlegt.

Erreicht der Druck des Mediums in dem Druckbereich im Ventilsitz einen Wert, welcher nahe dem Grenzdruck zum Öffnen des Sicherheitsventils liegt, so besteht das Problem, bei diesem Druck den Dichtteller vollständig dichtend an dem Ventilsitz zu halten. Insbesondere bei häufigem Abheben von dem Ventilsitz und Anpressen an den Ventilsitz, können sich beispielsweise Verunreinigungen auf den Ventilsitz ablegen oder der Ventilsitz selber beziehungsweise der Dichtteller können sich leicht verformen, so dass schon beim Erreichen von Drücken in dem Druckbereich, welcher kleiner als der definierte Grenzdruck ist, der Dichtteller möglicherweise nicht mehr dichtend an dem Ventilsitz anliegt.

DE 26 27 233 A1 offenbart ein Sicherheitsventil mit einem konischen Ventilsitz, an welchem eine an einem beweglichen Ventilkörper angeordnete Dichtung zur Anlage kommt. Zusätzlich kommt eine Kegelfläche des Dichtkörpers direkt auf dem Ventilsitz in metallische Anlage. Das Dichtelement weist eine Dichtlippe auf, welche durch den herrschenden Fluiddruck an den Ventilsitz angedrückt wird. Aufgrund der konischen Form und der radialen Verformung der Dichtlippe beim Andrücken an den Ventilsitz lässt sich bei dieser Ventilanordnung der genaue Öffnungszeitpunkt nur schwer definieren.

Es ist Aufgabe der Erfindung, ein Sicherheitsventil zu schaffen, bei welchem auch nahe einem Grenz- bzw. Auslösedruck eine zuverlässige Abdichtung und gleichzeitig ein zuverlässiges Öffnen bei Erreichen des Grenz- bzw. Auslösedruckes gewährleistet ist.

Diese Aufgabe wird erfindungsgemäß durch ein Sicherheitsventil mit den in Anspruch 1 angegebenen Merkmalen gelöst. Vorteilhafte Ausgestaltungen sind in den Unteransprüchen, der nachfolgenden Beschreibung und den Zeichnungen angegeben.

Das erfindungsgemäße Sicherheitsventil weist einen Ventilsitz und einen relativ zu dem Ventilsitz entlang einer ersten Achse beweglichen und entlang dieser ersten Achse in Richtung des Ventilsitzes mit einer Haltekraft vorgespannten Dichtkörper auf, wobei an dem Dichtkörper ein Dichtelement derart angeordnet ist, dass es mit einer ersten Seite dichtend mit dem Ventilsitz in Anlage bringbar ist, eine an einer der ersten Seite des Dichtelements entgegengesetzten zweiten Seite des Dichtelements gelegene Druckfläche über zumindest einen Druckkanal mit einem von dem Ventilsitz umgebenen Druckbereich verbunden ist, und an dem Dichtkörper eine Anlagefläche angeordnet ist, welche im geschlossenen Zustand des Sicherheitsventils an einer Auflagefläche zur Anlage kommt. Grundgedanke der Erfindung ist es, dass ein Abdichten des Ventilsitzes über ein Anpressen des Dichtelements an den Ventilsitz abhängig von dem Druck eines Mediums in einem von dem Sicherheitsventil verschlossenen Raum erfolgt. Je höher der Druck des Mediums ist, desto stärker wird das Dichtelement an den Ventilsitz angepresst. Gleichzeitig wirkt jedoch die Haltekraft nicht auf das Dichtelement und den Ventilsitz, sondern wird von der Auflagefläche aufgenommen.

Das Dichtelement und der Dichtkörper sind vorzugsweise zwei separate Bauteile, welche weiter bevorzugt aus unterschiedlichen Materialien gefertigt sind. So kann das Dichtelement hinsichtlich seiner Dichteigenschaften optimiert sein, während der Dichtkörper aus einem Material ausgebildet sein kann, welches zur Kraftübertragung optimiert ist.

In einem vom Ventilsitz umgebenen Druckbereich befindet sich das Medium und verteilt sich über den Druckkanal unter anderem auch entlang der zweiten Seite des Dichtelements. Steigt nun der Druck des Mediums im Druckbereich, so wirkt dieser Druck über den Druckkanal auch auf die zweite Seite des Dichtelements. Abhängig von der Größe der so druckbeaufschlagten Fläche der zweiten Seite wird so eine Kraft durch das Medium auf das Dichtelement erzeugt. Aufgrund der einander abgewandten Ausrichtung der ersten Seite und der zweiten Seite des Dichtelementes wirkt diese Kraft auf das Dichtelement in Richtung des Ventilsitzes, und die erste Seite kann somit durch diese Kraft an den Ventilsitz angepresst werden. Die dichte Anlage des Dichtelements an dem Ventilsitz erfolgt somit allein durch den Druck des Mediums unabhängig von der Haltekraft, welche auf den Dichtkörper wirkt.

Wenn in dem von dem Ventilsitz umgebenen Druckbereich der Druck ansteigt, wird so zum einen über den Druckkanal das Dichtelement gegen den Ventilsitz gedrückt. Gleichzeitig wirkt der Druck in dem Druckbereich auf den Dichtkörper entgegen der Haltekraft. Wenn die von dem Druck in dem Druckbereich erzeugte Druckkraft die Haltekraft übersteigt, bewegt sich der gesamte Dichtkörper in Richtung der ersten Achse entgegen der Haltekraft, wobei der Dichtkörper mit seiner Anlagefläche von der Auflagefläche abhebt. Durch diese Bewegung wird dann auch das Dichtelement mit von dem Ventilsitz wegbewegt, so dass das Ventil geöffnet wird, so dass eine Druckentlastung aus dem Druckbereich heraus möglich ist. Wenn der Druck in dem Druckbereich wieder soweit abnimmt, dass die Druckkraft, welche von dem Druck erzeugt wird, kleiner als die Haltekraft wird, wird der Dichtkörper durch die Haltekraft wieder zurück in seine Ausgangslage bewegt, in welcher die Anlagefläche an der Auflagefläche anliegt und der Dichtkörper auf dem Ventilsitz dichtend zu liegen kommt.

Die Anlagefläche und/oder die Auflagefläche können jeweils als Ringfläche ausgebildet sein, welche aneinander zur Anlage kommen. Alternativ können die Anlagefläche und/oder die Auflagefläche auch so ausgebildet sein, dass sie sich nicht über den gesamten Umfang um die erste Achse herum erstrecken sondern zentral angeordnet sind oder nur an einem oder mehreren Umfangsbereichen. So können die Auflagefläche und/oder die Anlagefläche z.B. auch als mehrere, vorzugsweise über den Umfang verteilt angeordnete Einzelflächen ausgebildet sein. Das heißt so werden mehrere Anlageflächen und mehrere Auflageflächen geschaffen, wobei zweckmäßigerweise jede Anlagefläche an einer gegenüberliegenden Auflagefläche zur Anlage kommt.

Die Anlagefläche kann einstückig mit dem Dichtkörper ausgebildet sein oder aber an einem mit dem Dichtkörper verbundenen Bauteil angeordnet sein. Auch können mehrere Bauteile mit dem Dichtkörper verbunden sein und so mehrere, vorzugsweise voneinander beabstandete Anlageflächen schaffen.

So kann der Dichtkörper vorzugsweise zumindest ein Anlageelement aufweisen, an welchem zumindest eine Anlagefläche ausgebildet ist. Dieses Anschlagelement kann mit der übrigen Struktur des Dichtkörpers verbunden oder einstückig mit diesem ausgebildet sein.

Erfindungsgemäß ist das Dichtelement relativ zum Dichtkörper beweglich, insbesondere mit einem definierten Spiel. Somit wird die dichtende Anlage des Dichtelements an den Ventilsitz derart sichergestellt, dass das Dichtelement bei Erhöhung des Drucks des Mediums, an den Ventilsitz angepresst werden kann ohne, dass dabei der Dichtkörper seine Stellung gegenüber dem Ventilsitz verändert. Vorzugsweise ist die Beweglichkeit des Dichtelementes relativ zu dem Dichtkörper so ausgestaltet, dass das Dichtelement auch dann relativ zu dem Dichtkörper beweglich ist, wenn dieser an der Auflagefläche anliegt. Ferner bleibt die Anlage des Dichtelements an dem Ventilsitz so auch nahe dem Grenzdruck gewährleistet.

Dabei ist das Dichtelement entlang der ersten Achse beweglich. So sind das Dichtelement relativ zu dem Dichtkörper sowie der Dichtkörper relativ zu dem Ventilsitz entlang derselben Achse beweglich. So kann das Dichtelement dicht an dem Ventilsitz anliegen unabhängig von der genauen axialen Positionierung des Dichtkörpers an der Anlagefläche. Befindet sich das Sicherheitsventil in einem geschlossenen Zustand und wird der Dichtkörper von der Auflagefläche um ein Maß beabstandet, welches größer als die axiale Beweglichkeit bzw. das axiale Spiel des Dichtelements zu dem Dichtkörper ist, so wird das Dichtelement dabei entlang der ersten Achse mitbewegt, um das Ventil zu öffnen.

Vorzugsweise ist das Dichtelement so ausgebildet, dass es relativ zu dem Dichtkörper eine reine Linearbewegung ausführt und sich nicht verschwenkt oder verbiegt. So kann ein starres Material als Dichtelement Verwendung finden. Außerdem kann so eine plane Anlage an dem Ventilsitz mit guten Dichteigenschaften erreicht werden. Ferner ist das Dichtelement bevorzugt als Ganzes relativ zu dem Dichtkörper beweglich, d. h. es bewegt sich bevorzugt nicht lediglich nur ein Abschnitt des Dichtelementes relativ zu dem Dichtkörper.

In einer bevorzugten Ausführungsform weist der Dichtkörper ein Halteelement auf, welches die erste Seite des Dichtelements umgreift. Das Halteelement umfasst zumindest einen Teil der ersten Seite des Dichteelements, d.h. der Seite, welche in dichtende Anlage mit dem Ventilsitz tritt. Das Halteelement begrenzt so die Bewegbarkeit des Dichtelements und bewirkt, dass das Dichtelement mit dem Dichtkörper axial mitbewegt wird, um das Ventil bei Überschreiten der Haltekraft zu öffnen. Ist das Dichtelement entlang der ersten Achse gegenüber dem Dichtkörper beweglich, so ist die erste Seite des Dichtelementes vorzugsweise quer zur ersten Achse ausgebildet und gelangt bei einer Bewegung entlang der ersten Achse in Anlage mit dem Ventilsitz. Das Halteelement umgreift dabei die erste Seite des Dichtelements so, dass die dichtende Anlage des Dichtelements an den Ventilsitz durch das Halteelement nicht beeinträchtigt oder gar verhindert wird. Vielmehr kann abhängig von der Ausbildung des Halteelements das vorhergehend genannte Spiel ermöglicht werden, innerhalb welchen sich das Dichtelement gegenüber dem Dichtkörper bewegen kann. Bewegt sich nun aus dem geschlossenen Zustand des Sicherheitsventils der Dichtkörper von der Auflagefläche weg, so kann das Dichtelement über das Halteelement mit von dem Ventilsitz wegbewegt werden.

Weiterhin bevorzugt ist der Druckkanal im Halteelement und/oder im Dichtelement ausgebildet. Das Halteelement ist dabei an dem Dichtkörper derart angeordnet, dass über den Druckkanal die Druckfläche der zweiten Seite des Dichtelements mit dem Druckbereich innerhalb des Ventilsitzes verbunden ist. Das Halteelement ist dazu bevorzugt zumindest angrenzend zu oder in dem Druckbereich, sowie an der Druckfläche oder benachbart zu dieser angeordnet. Das Halteelement kann beispielsweise tellerförmig ausgebildet sein, wobei ein radial äußerer Teil des Umfangs des Halteelements in Anlage mit dem Dichtelement ist. Der Druckkanal kann dabei z.B. als Durchgangsloch parallel zu der ersten Achse in dem Halteelement ausgebildet sein.

Alternativ oder ergänzend kann in oder an dem Dichtelement ein Druckkanal ausgebildet sein, der die Druckfläche der zweiten Seite des Dichtelements mit dem Druckbereich innerhalb des Ventilsitzes verbindet. So kann z.B. in dem Dichtelement ein Durchgangsloch parallel zu der ersten Achse ausgebildet sein. Sind z.B. ein Halteelement und ein Dichtelement aneinander anliegend angeordnet, so kann beispielsweise entlang deren Flächen, an denen sie aneinander anliegen, eine Ausnehmung ausgebildet sein, welche einen Druckkanal bildet. Dabei sind Halteelement und Dichtelement vorzugsweise derart angeordnet, dass entsprechend der vorherigen Beschreibung der Druckkanal zwischen dem Halteelement und dem Dichtelement die Druckfläche der zweiten Seite des Dichtelements mit dem Druckbereich innerhalb des Ventilsitzes verbindet.

Bevorzugt weist der Dichtkörper eine in Richtung des Ventilsitzes geöffnete Ausnehmung auf, in welcher das Dichtelement und/oder das Halteelement zumindest teilweise angeordnet sind. Die Ausnehmung ist somit dem Ventilsitz zugewandt geöffnet ausgebildet. Sie kann beispielsweise als eine Vertiefung im Dichtkörper ausgebildet sein, und eine quer zur ersten Achse kreisförmige Form aufweisen, das heißt umfänglich kann die Ausnehmung durch einen Rand oder Kragen des Dichtkörpers umgeben sein. Die Ausnehmung ist dabei derart ausgebildet, dass das Dichtelement und/oder das Halteelement zumindest teilweise in ihr angeordnet sein können. Ist weiterhin beispielsweise das Halteelement zusammen mit dem Dichtelement in der Ausnehmung des Dichtkörpers angeordnet, so kann das Dichtelement zwischen dem Rand des Dichtkörpers und dem Halteelement angeordnet sein, was die Beweglichkeit des Dichtelements quer zur ersten Achse begrenzen kann. Ergänzend kann das Halteelement einen Teil des Dichtelements wie beschrieben derart umgreifen, dass entlang der ersten Achse das Dichtelement innerhalb eines gewissen Spiels in der Ausnehmung bewegbar ist, wobei das Dichtelement vorzugsweise zumindest mit einem axialen Abschnitt stets innerhalb der Ausnehmung, d.h. innerhalb des umgebenden Randes bleibt.

Die erste Seite des Dichtelements, welche mit dem Ventilsitz in Anlage kommt, ist bevorzugt von der Ausnehmung abgewandt ausgebildet und in Richtung des Ventilsitzes angeordnet. Vorteilhaft ist wie beschrieben die Druckfläche der zweiten Seite des Dichtelements dem Dichtkörper zugewandt ausgebildet. Sie befindet sich somit vorzugsweise innerhalb der Ausnehmung.

Besonders bevorzugt ist ein Druckraum zwischen der Druckfläche des Dichtelements und einer der Druckfläche gegenüberliegenden ersten Fläche des Dichtkörpers gebildet, wobei der Druckraum über den Druckkanal mit dem Druckbereich innerhalb des Ventilsitzes verbunden ist. Das Medium kann somit über den Druckkanal in dem Druckraum verteilen. Sowohl der Dichtkörper als auch das Dichtelement weisen dann jeweils eine Fläche auf, welche mit dem Medium beaufschlagt ist und auf welche eine Kraft aufgrund des Drucks des Mediums, abhängig von der jeweiligen Oberflächengröße der beaufschlagten Fläche wirkt.

Die Kraft, welche durch den Druck des Mediums auf die erste Fläche des Dichtkörpers wirkt, wirkt der Haltekraft als Gegenkraft entgegen. Ist diese Gegenkraft größer als die Haltekraft, so kann aus dem geschlossenen Zustand des Sicherheitsventils durch einen ausreichenden Druck des Mediums, welcher einen der Haltekraft entsprechenden Grenzdruck übersteigt, die Anlagefläche des Dichtkörpers von der Auflagefläche abgehoben werden. Weiterhin kann dabei auch das Dichtelement aus seiner dichtenden Anlage am Ventilsitz bewegt werden, wenn der Hub des Dichtkörpers entsprechend groß ist. Somit ist eine druckabhängige Öffnung des Sicherheitsventils aus seinem geschlossenen Zustand bewirkt, wobei das Lösen des Dichtelements vom Ventilsitz nicht von dem Druck des Mediums auf das Dichtelement abhängt, sondern von dem Druck, welcher auf die erste Fläche des Dichtkörpers wirkt.

Ist das Dichtelement in einer Ausnehmung des Dichtkörpers angeordnet, so ist der Druckraum vorteilhaft der Teil der Ausnehmung, welcher durch den Dichtkörper und die zweite Seite des Dichtelements umschlossen ist.

In einer besonders bevorzugten Ausführungsform weist die Druckfläche des Dichtelements in Richtung quer zu der ersten Achse eine größere Oberfläche als eine im geschlossenen Zustand des Sicherheitsventils vom Ventilsitz umschlossene Teilfläche der ersten Seite des Dichtelements auf. Im geschlossenen Zustand des Sicherheitsventils ist die Teilfläche jener, vom Ventilsitz umschlossene Abschnitt dieser ersten Seite, welcher durch das Medium im Inneren des Ventilsitzes beaufschlagt werden kann. Die Kraft welche der Druck des Mediums auf diese Teilfläche bewirkt, wirkt der Kraft entgegen, welche durch den Druck des Mediums an der Druckfläche, d.h. der abgewandten zweiten Seite des Dichtelements, aufgebracht ist. Ist die Oberfläche der Druckfläche des Dichtelements in Richtung quer zu der ersten Achse größer als die genannte Teilfläche der ersten Seite, so wirkt auf die Druckfläche eine größere Kraft als auf die erste Seite und das Dichtelement wird so mit seiner ersten Seite gegen den Ventilsitz gepresst, wobei mit steigendem Druck die Andruckkraft steigt.

Bevorzugt ist die Auflagefläche innerhalb oder außerhalb des Ventilsitzes ausgebildet. Ist die Auflagefläche außenumfänglich zu dem Ventilsitz ausgebildet, so liegt der Dichtkörper mit seiner Anlagefläche radial außen benachbart zu dem Ventilsitz an. Vorteilhaft sind dabei die Anlagefläche und die Auflagefläche quer, vorzugsweise senkrecht zur ersten Achse ausgebildet. Die Flächennormale der Anlagefläche kann somit parallel zur ersten Achse und somit in Bewegungsrichtung des Dichtkörpers sein, was eine stabile, durch die Haltekraft vorgespannte Anlage an der Auflagefläche ermöglicht.

Ist die Auflagefläche innerhalb des Ventilsitzes ausgebildet, so kann beispielsweise das Dichtelement eine Ausnehmung aufweisen, durch welche ein Teil des Dichtkörpers oder z.B. das Halteelement durchgeführt ist. Dieser durchgeführte Teil des Dichtkörpers oder des Halteelements kann die Anlagefläche aufweisen, welche im geschlossenen Zustand des Sicherheitsventils in Anlage mit der Auflagefläche ist, welche dabei im Inneren des Ventilsitzes angeordnet sein kann. Die Ausnehmung im Dichtelement kann dabei derart breit ausgebildet sein, dass der diese Ausnehmung durchgreifende Teil des Dichtkörpers diese nicht vollständig ausfüllt, sondern der Druckkanal umfänglich zwischen diesem Teil und dem Dichtelement gebildet ist.

Besonders bevorzugt umgibt die Auflagefläche den Ventilsitz umfänglich und ist vorzugsweise einstückig mit diesem ausgebildet. Die Auflagefläche kann dabei den Ventilsitz an dessen Innen- und/oder Außenumfang als geschlossener Ring umgeben. Alternativ ist es jedoch auch möglich, die Auflagefläche nur in einem Abschnitt der umfänglichen Erstreckung auszubilden. Ferner ist es möglich, die Auflagefläche in Form mehrerer, vorzugsweise in Umfangsrichtung voneinander beabstandeter Teilflächen auszubilden. Bevorzugt kann die Auflagefläche, unabhängig davon, ob sie als einteilige Fläche oder im Form mehrerer Teilflächen ausgebildet ist, einstückig mit dem Ventilsitz ausgebildet sein. So können der Ventilsitz und die Auflagefläche in demselben Bauteil, beispielsweise durch spanende Bearbeitung ausgebildet sein. Dies verringert die Anzahl der Einzelteile des Sicherheitsventils und damit verbunden dessen Montageaufwand.

Alternativ kann die Auflagefläche auch an einem separaten Bauteil oder an mehreren separaten Bauteilen ausgebildet sein, welche mit dem den Ventilsitz tragenden Bauteil in geeigneter Weise verbunden, beispielweise verschraubt oder verschweißt sind.

In einer besonders bevorzugten Ausführungsform ist entlang eines Außenumfangs der Druckfläche an dem Dichtelement ein vorzugsweise elastisches Dichtmittel zwischen dem Dichtelement und dem Dichtkörper angeordnet. Das Dichtmittel kann beispielsweise als O-Ring oder als federndes Dichtmittel, wie z.B. ein federvorgespanntes Dichtmittel, ausgebildet sein. Das Dichtmittel kann dabei als federvorgespanntes Dichtmittel mit einer Dichtlippe ausgebildet sein. Das Dichtmittel kann an dem Dichtkörper und/oder an dem Dichtelement angeordnet sein, so dass es eine Abdichtung zwischen dem Dichtkörper und dem Dichtelement herstellt. Das Dichtmittel kann auch einstückig mit dem Dichtelement ausgebildet sein bzw. das Dichtelement kann am Umfang der Druckfläche selber in dichtenden Kontakt mit dem Dichtkörper sein.

Das Dichtmittel kann aus jedem geeigneten Material, insbesondere Kunststoff gefertigt sein, z.B. kann es aus einem fluorhaltigem Kunststoff gebildet sein. Kunststoffe mit Fluoranteil weisen eine sehr hohe chemische Widerstandsfähigkeit auf und sind auch in einem sehr breiten Temperaturbereich anwendbar, ohne dass dabei sich die mechanischen Eigenschaften des Kunststoffes wesentlich ändern.

Die Druckfläche und die erste Seite des Dichtkörpers definieren bevorzugt einen Druckraum, wobei dieser aufgrund der Anordnung des Dichtmittels zwischen dem Dichtelement und dem Dichtkörper nach außen hin druckdicht verschlossen ist. Der Druckraum ist dann nur noch mit dem Druckbereich innerhalb des Ventilsitzes über den Druckkanal verbunden. Das Dichtmittel kommt besonders bevorzugt am Innenumfang eines umfänglichen Rands einer Ausnehmung in den Dichtkörper, in welcher das Dichtelement gelegen ist, zur Anlage.

Ist das Dichtelement gegenüber dem Dichtkörper beweglich angeordnet, so kann vorteilhaft das Dichtmittel derart ausgebildet sein, dass die gewünschte Beweglichkeit des Dichtelements gegenüber dem Dichtkörper nicht eingeschränkt wird, sondern z.B. durch eine Elastizität des Dichtmittels gewährleistet ist.

Gemäß einer besonderen Ausführungsform sind das Dichtelement und das Dichtmittel einstückig ausgebildet. Das Dichtelement kann beispielsweise an der dem Dichtkörper zugewandten Fläche so ausgeformt sein, dass es ein Dichtmittel mit den vorhergehend beschriebenen Eigenschaften bildet. Alternativ oder zusätzlich kann das Dichtelement in verschiedenen Abschnitten auch aus unterschiedlichen Materialien bestehen oder bedingt durch deren Ausformung unterschiedliche mechanische Eigenschaften aufweisen, sodass der das Dichtmittel bildende Bereich des Dichtelements beispielsweise elastischer sein kann als der übrige Teil des Dichtelements. Der das Dichtmittel bildende Bereich des Dichtelements kann derart vorstehen, dass beim Andrücken des Dichtelements an den Dichtkörper eine Fläche des Dichtkörpers bevorzugt mit dem das Dichtmittel bildende Bereich des Dichtelements in dichte Anlage kommt. Die einstückige Ausbildung des Dichtelements mit dem Dichtmittel ermöglicht ein vereinfachte Montage und zuverlässige Abdichtung.

Besonders bevorzugt ist das Dichtmittel in einer Nut angeordnet, welche umfänglich zur ersten Achse am Außenumfang des Dichtelements ausgebildet ist. Das vorzugsweise elastische Dichtmittel ist dabei derart in der Nut angeordnet, dass der Dichtkörper über das Dichtmittel in einer dichten Anlage mit dem Dichtelement ist. Weist der Dichtkörper beispielsweise eine in Richtung des Ventilsitzes geöffnete Ausnehmung auf, so kann das Dichtmittel radial zur ersten Achse zwischen einem umfänglichen Rand des Dichtkörpers und dem Dichtelement angeordnet sein.

Bevorzugt ist das Dichtmittel in einer Nut angeordnet, welche an einem Innenumfang des Dichtkörpers ausgebildet ist. Das Dichtmittel ist analog zu vorheriger Beschreibung derart in der Nut angeordnet, dass der Dichtkörper über das Dichtmittel in einer dichten Anlage mit dem Dichtelement ist. Dabei ist das Dichtmittel vorzugsweise entlang des vollständigen Innenumfangs des Dichtkörpers in Anlage mit diesem.

In einer besonders bevorzugten Ausführungsform ist das Dichtelement aus einem elastischen oder metallischen Material gebildet. Ein aus einem elastischen Material gebildetes Dichtelement ermöglicht im geschlossenen Zustand des Sicherheitsventils eine druckdichte Anlage des Dichtelements an den Ventilsitz, bei welcher sich das Dichtelement an den Ventilsitz derart anpresst, dass das Dichtelement elastisch verformt und der Ventilsitz durch das elastische Material dicht umschlossen wird.

Ein aus einem metallischen Material gebildetes Dichtelement weist eine hohe Lebensdauer auf. So kann es beispielsweise gegenüber bestimmten Medien beständiger als ein elastisches Material sein und weist eine größere Formstabilität auf.

Die Erfindung ist nachfolgend beispielhaft anhand von den in den Zeichnungen dargestellten Ausführungsbeispielen näher erläutert. Es zeigen:
- Fig. 1: eine Teilansicht eines Längsschnitts eines erfindungsgemäßen Sicherheitsventils,
- Fig. 2: die Einzelheit II des Sicherheitsventils gemäß Figur 1,
- Fig. 3: eine weitere Darstellung der Einzelheit II, und
- Fig. 4: einen Längsschnitt eines alternativen Dichtkörpers des Sicherheitsventils gemäß Figur 1 und 2.

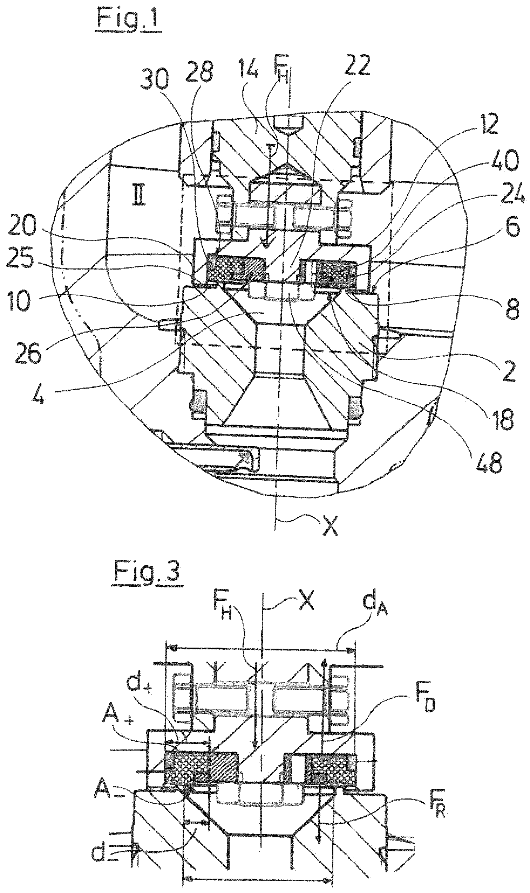

Ein in Figur 1 schematisch dargestelltes Sicherheitsventil weist einen Ventilkörper 2 auf, welcher einen mediumführenden Druckbereich 4 umgibt. Ein um eine Längsachse X des Ventilkörpers 2 radialsymmetrisch und an einer senkrecht zur Längsachse X ausgebildeten Stirnseite 6 des Ventilkörpers 2 ausgebildeter Ventilsitz 8 erstreckt sich in Form einer ringförmigen Auskragung parallel zur Längsachse X um den Druckbereich 4. Soweit nicht anders im Folgenden beschrieben, ist die Längsachse X als Symmetrie- und Bewegungsachse der nachfolgend beschriebenen Ausbildung des Sicherheitsventils zu verstehen. Quer zur Längsachse X ist seitlich bzw. radial außerhalb des Ventilsitzes 8 an der Stirnseite 6 des Ventilkörpers 2 eine Auflagefläche 10 ausgebildet.

Entlang der Längsachse X ist der Stirnseite 6 des Ventilkörpers 2 gegenüberliegend ein tellerförmiger Dichtkörper 12 angeordnet. Der Dichtkörper 12 ist über eine entlang der Längsachse X in Richtung des Ventilkörpers 2 wirkende Haltekraft F_{H} vorgespannt. Beispielsweise kann an einer vom Ventilkörper 2 abgewandten Seite des Dichtkörpers 12 ein Kolben 14 angeordnet sein, über den eine pilotgesteuerte Vorspannung des Dichtkörpers 12 in Richtung des Ventilsitzes 2 ermöglicht ist, d.h. die Vorspannung des Dichtkörpers 12 erfolgt druckabhängig. Alternativ kann z.B. eine Federvorbelastung bzw. Federvorspannung des Dichtkörpers 12 in Richtung des Ventilsitzes 2 mit der Haltekraft F_{H} vorgesehen sein.

Der Dichtkörper 12 weist eine dem Ventilsitz 8 zugewandte, kreisringförmige Ausnehmung 18 auf, welche außenumfänglich durch eine sich zu der Stirnseite 6 hin erstreckenden Kragen bzw. Rand 20 des Dichtkörpers 12 und zentral durch einen sich in Richtung der Längsachse X zu der Stirnseite 6 hin erstreckenden Zapfen 22 des Dichtkörpers 12 begrenzt ist. Im geschlossenen Zustand des Sicherheitsventils liegt eine von der Stirnseite des Rands 20 gebildete Anlagefläche 25 an der Auflagefläche 10 an, d.h. der Dichtkörper 12 ist über die Haltekraft F_{H} in Anlage mit dem Ventilkörper 2. Dabei verläuft der Kraftfluss nicht über den Ventilsitz 8 sondern über die Anlagefläche 25 und die Auflagefläche 10.

Innerhalb der Ausnehmung 18 sind ein kreisringförmiges Dichtelement 24 sowie ein ebenfalls kreisringförmig ausgebildetes Halteelement 26 angeordnet. Dabei ist das Halteelement 26 den Zapfen 22 umfänglich umgebend angeordnet und über eine Mutter 48 in der Ausnehmung gehalten. Das Dichtelement 24 liegt innenumfänglich an dem Rand 20 des Dichtkörpers 12 an. Das Dichtelement 24 weist in seinem Außenumfang umfänglich zu der Längsachse X eine Nut 28 auf, in welcher ein O-Ring 30 als elastisches Dichtmittel angeordnet ist, mit welchem das Dichtelement 24 in der Ausnehmung 18 am Innenumfang des Rands 20 druckdicht anliegt.

Das Dichteelement 24 ist vorzugsweise aus Kunststoff, insbesondere aus Fluorpolymeren gebildet. Somit ist es gegenüber verschiedenen Fluiden und/oder Gasen resistent ausgebildet. Es kann anwendungsbedingt von Vorteil sein, wenn das Dichtelement 24 eine gewisse Elastizität aufweist, oder aber hohe Drücke aushalten kann, ohne dabei verformt zu werden. Alternativ kann das Dichtelement 24 auch aus Metall oder aus einer Metalllegierung gebildet sein.

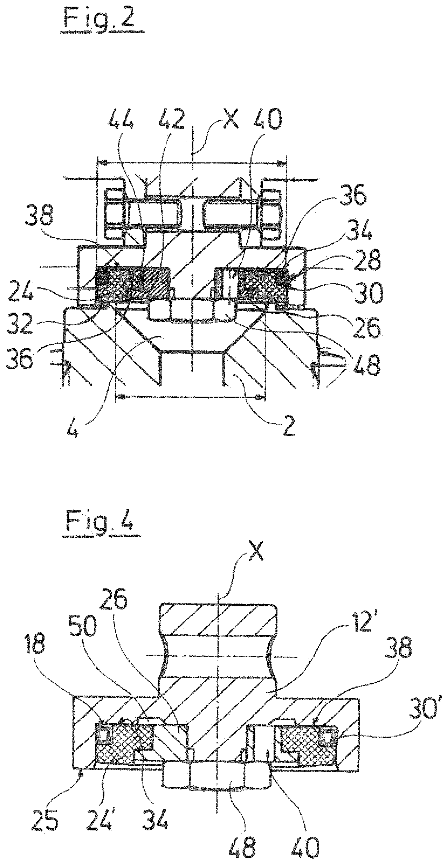

Das Halteelement 26 ist in der Ausnehmung 18 radial zwischen dem Zapfen 22 und dem Dichtelement 24 angeordnet, so dass es den Zapfen ringförmig umgibt. Im geschlossenen Zustand des Sicherheitsventils ist das Halteelement 26 von dem Medium umflutet. Im geschlossenen Zustand des Sicherheitsventils liegt das Dichtelement 24 mit einer, der Stirnseite 6 des Ventilkörpers 2 zugewandten ersten Seite 32 an dem Ventilsitz 8 des Ventilkörpers 2 an (Fig. 2). Der Dichtkörper 12 weist in der Ausnehmung 18 eine dem Ventilsitz 8 zugewandte erste Fläche 36 auf, welche einer zweiten Seite 34 des Dichtelements 22 gegenüber liegt. Die zweite Seite 34 ist dabei an dem Dichtelement 24 der ersten Seite 32 abgewandt ausgebildet. Zwischen der zweiten Seite 34 des Dichtelements 24 und der ersten Fläche 36 des Dichtkörpers 12 ist dabei ein Druckraum 38 im Inneren der Ausnehmung 18 ausgebildet.
Das Halteelement 26 weist einen Druckkanal 40 auf, welcher sich parallel zur Längsachse X als Durchgangsloch erstreckt und den Druckbereich 4 im Inneren des Ventilsitzes 8 mit dem Druckraum 38 verbindet. Das heißt, das Medium befindet sich im Druckkanal 40 und im Druckraum 38 und weist überall denselben Druck auf, den es auch im Druckbereich 4 aufweist.

Das Dichtelement 24 weist an seinem dem Halteelement 26 zugewandten Innenumfang eine sich quer zur Längsachse X erstreckende Aussparung bzw. Stufe auf. Das Halteelement 26 weist an seinem Außenumfang ein sich radial nach außen erstreckendes und zu der Aussparung des Dichtelements 24 formschlüssiges Mitnehmerelement 42 auf. Das Mitnehmerelement 42 greift derart formschlüssig in die Aussparung des Dichtelementes 24 ein, dass das Dichtelement 24 in seiner Bewegungsmöglichkeit in Richtung der Längsachse X relativ zu dem Dichtkörper 12 begrenzt ist. Das Mitnehmerelement 42 weist dabei eine Mitnehmerfläche 44 auf, welche quer zur Längsachse X an einer von der Stirnseite 6 des Ventilkörpers 2 abgewandten Seite des Mitnehmers 42 ausgebildet ist. Diese Mitnehmerfläche liegt an der ersten Seite 32 des Dichtelementes 24 in der Stufe an dessen Innenumfang an und umgreift so das Dichtelement 24 von dessen erster Seite 32 her. Das Halteelement 26 ist derart an dem Dichtkörper 12 angeordnet, dass die Mitnehmerfläche 44 zu der ersten Fläche 36 des Dichtkörpers 12 einen derartigen Abstand aufweist, dass zwischen dem Dichtelement 24 und dem Mitnehmerelement 42 entlang der Längsachse X ein gewisses Spiel ausgebildet ist, innerhalb dessen sich das Dichtelement 24 relativ zu dem Dichtkörper 12 axial bewegen kann.
Das Halteelement 26 begrenzt so mit seinem Mitnehmerelement 42 die Beweglichkeit des Dichtelements 24 entlang der Längsachse X in Richtung des Ventilkörpers 2. An dem sich in der Richtung des Ventilkörpers 2 erstreckenden Zapfen 22 des Dichtkörpers 12 ist ein Gewinde ausgebildet, an welchem eine Mutter 48 derart angeschraubt ist, dass die Mutter 48 das Halteelement 26 an dem Dichtkörper 12 befestigt. Alternativ zu der Mutter 48 können auch andere geeignete Befestigungsmittel zur Befestigung des Halteelements 22 an dem Dichtkörper 12 angeordnet sein, wobei dazu auch der Zapfen 22 des Dichtkörpers 12 eine andere, geeignet angepasste Ausbildung aufweisen kann. Die Mutter 48 beziehungsweise ein alternativ geeignetes Befestigungsmittel ist dabei derart ausgebildet, dass durch deren Anordnung der in dem Halteelement 26 ausgebildete Druckkanal 40 nicht verschlossen und somit die Verbindung zwischen dem Druckbereich 4 des Ventilkörpers 2 und dem Druckkanal 40 sowie dem Druckraum 38 nicht unterbrochen ist. Im geschlossenen Zustand des Sicherheitsventils wirkt auf das Dichtelement 24 sowohl auf seine erste Seite 32 als auch auf seine zweite Seite 34 jeweils eine Kraft, welche durch den an der ersten und zweiten Seite 32, 34 vorherrschenden, gleichen Druck p des Mediums bewirkt wird (Fig. 2, 3). Während die Kraft an der ersten Seite 32 von dem Ventilsitz weg gerichtet ist, ist die Kraft an der zweiten Seite 34 in Richtung des Ventilsitzes gerichtet. Die Kräfte wirken somit einander entgegen. Die Wirkfläche A₋ der ersten Seite 32 ist die kreisringförmige, druckbeaufschlagte Oberfläche des Dichtelements 24 quer zur Längsachse X, welche von dem Ventilsitz 8 umschlossen ist und das Halteelement umgibt. Diese Wirkfläche A₋ weist dabei eine radiale Ringbreite d₋ auf. Die Wirkfläche A₊ an der zweiten Seite 34 des Dichtelements 24 ist die kreisringförmige, druckbeaufschlagte Oberfläche, welche dem Dichtkörper 12 und den Druckraum 38 zugewandt ist. Die Wirkfläche A₊ weist dabei eine radiale Ringbreite d₊ auf (siehe Fig. 3). Das Dichtelement ist derart ausgebildet, dass die Wirkfläche A₊ größer als die Wirkfläche A₋ ist, d.h. das bei einem Druck p des Mediums das Dichtelement 24 in Richtung des Ventilsitzes 8 mit einer resultierenden Kraft F_{R} ≈ p(A₊-A₋) gepresst wird und somit dichtend in Anlage an den Ventilsitz 8 kommt.

An dem Dichtkörper 12 wirken neben der Haltekraft F_{H} in Richtung des Ventilsitzes 2 auch noch Kräfte, welche durch den Druck des Mediums bedingt sind. Von der Stirnseite 6 des Ventilkörpers 2 weg zeigend wirkt der Druck p auf die Oberfläche des Zapfens 22 und der ersten Fläche 36 des Dichtkörpers 12 in der Ausnehmung 18, also auf die kreisförmige Fläche A_{D} mit dem Durchmesser d_{A} der Ausnehmung 18, woraus eine Kraft F_{D} resultiert, welche der Haltekraft F_{H} und der resultierenden Kraft F_{R} entgegen wirkt.

Die Ausnehmung 18 weist einen Durchmesser d_{A} auf, sodass bei einem Grenzdruck p_{g} des Mediums, die durch das Medium an dem Dichtkörper 12 entstehende, vom Ventilsitz 8 abgewandte Kraft F_{D} größer als die Summe aus Haltekraft F_{H} und resultierender Kraft F_{R} ist. Ab dem Grenzdruck p_{g} wird somit der Dichtkörper 12 aus der Anlage mit der Auflagefläche 10 gebracht. Wenn der axiale Hub des Dichtkörpers 12 größer als das axiale Spiel des Dichtelements 24 ist, wird auch das Dichtelement 24 durch formschlüssiges Anliegen des Mitnehmerelements 42 des Halteelements 26 in der Aussparung des Dichtelements 26 aus der Anlage mit dem Ventilsitz 8 gebracht, so dass ein Teil des Mediums aus dem Druckbereich 4 entweichen kann, bis der Druck des Mediums im Druckbereich 4 unter den Grenzdruck p_{g} fällt. Dann ist die Kraft F_{D} nicht mehr größer als die Haltekraft F_{H}. Der Dichtkörper 12 bewegt sich zurück und das Dichtelement 24 kommt wieder in eine dichtende Anlage an den Ventilsitz 8, während der Dichtkörper 12 mit seiner Anlagefläche 25 in Anlage mit der Auflagefläche 10 kommt, womit das Sicherheitsventil wieder verschlossen ist.
In der in Figur 4 skizzenhaft gezeigten alternativen Ausführungsform ist ein Dichtkörper 12' ähnlich dem Dichtkörper 12 ausgebildet und weist eine Ausnehmung 18 auf, in welcher ein Dichtelement 24' mit einem in einer Nut 28 angeordneten federndem bzw. federvorgespanntem Dichtmittel mit Dichtlippe 30' und einem Halteelement 26 angeordnet ist, welche über eine Mutter 48 in der Ausnehmung 18 gehalten werden. Ein federndes bzw. federvorgespanntes Dichtmittel 30' verbessert die Medienverträglichkeit und Temperaturbeständigkeit gegenüber einem O-Ring 30. In der, dem Ventilsitz 8 zugewandten Seite des Dichtkörpers 12' ist in der Ausnehmung 18 eine kreisringförmige Aussparung 50 derart ausgebildet, dass ein der Längsachse X zugewandter, radial innerer erster Teil der Aussparung 50 mit dem Druckkanal 40 verbunden ist und ein von der Längsachse X abgewandter, radial äußerer zweiter Teil der Aussparung 50 mit dem Druckraum 38 verbunden ist. Die Aussparung 50 ermöglicht somit eine umfänglich um die Längsachse X verlaufende Verbindung von dem als Durchgangsloch ausgebildeten Druckkanal 40 zu dem Druckraum 38. Somit ist eine Druckbeaufschlagung der zweiten Seite 34 des Dichtelements 24' sowie der dieser zweiten Seite 34 gegenüberliegend ausgebildeten Seite des Dichtkörpers 12' nicht nur nahe des Druckkanals 40, sondern auch vollständig umfänglich um die Längsachse X sichergestellt. Ebenso verbessert ein gleich verteilter Druckaufbau im Druckraum 38 ein ebenes Abheben des Dichtkörpers 12 von der Auflagefläche 10 des Ventilkörpers 2.

### Bezugszeichenliste

- 2: - Ventilkörper
- 4: - Druckbereich
- 6: - Stirnseite
- 8: - Ventilsitz
- 10: - Auflagefläche
- 12, 12': - Dichtkörper
- 14: - Kolben
- 18: - Ausnehmung
- 20: - Umrandung
- 22: - Zapfen
- 24: - Dichtelement
- 25: - Anlagefläche
- 26: - Halteelement
- 28: - Nut
- 30: - O-Ring
- 30': - federndes bzw. federvorgespanntes Dichtmittel
- 32: - erste Seite
- 34: - zweite Seite
- 36: - erste Fläche
- 38: - Druckraum
- 40: - Druckkanal
- 42: - Mitnehmerelement
- 44: - Mitnehmerfläche
- 48: - Mutter
- 50: - Aussparung
- X: - Längsachse
- p: - Druck
- d₊: - Ringbreite
- d₋: - Ringbreite
- F_{R}: - Kraft
- F_{H}: - Haltekraft
- F_{D}: - Kraft
- A_{D}: - Fläche
- d_{A}: - Durchmesser der Ausnehmung 18

## Patentansprüche

1. Sicherheitsventil mit einem Ventilsitz (8) und einem relativ zu dem Ventilsitz (8) entlang einer ersten Achse (x) beweglichen und entlang dieser ersten Achse (x) in Richtung des Ventilsitzes (8) mit einer Haltekraft (F_{H}) vorgespannten Dichtkörper (12), wobei an dem Dichtkörper (12) ein Dichtelement (24) derart angeordnet ist, dass es mit einer ersten Seite (32) dichtend mit dem Ventilsitz (8) in Anlage bringbar ist,
eine an einer der ersten Seite (32) des Dichtelements (24) entgegengesetzten zweite Seite (34) des Dichtelements (24) gelegene Druckfläche über zumindest einen Druckkanal (40) mit einem von dem Ventilsitz umgebenen Druckbereich verbunden ist, und
an dem Dichtkörper (12) eine Anlagefläche (25) angeordnet ist, welche im geschlossenen Zustand des Sicherheitsventils an einer Auflagefläche (10) zur Anlage kommt, **dadurch gekennzeichnet, dass** das Dichtelement (24) relativ zu dem Dichtkörper (12) entlang der ersten Achse (x) beweglich ist.

2. Sicherheitsventil nach Anspruch 1, **dadurch gekennzeichnet, dass** der Dichtkörper (12) zumindest ein Anlageelement aufweist, an welchem die Anlagefläche (25) ausgebildet ist.

3. Sicherheitsventil nach Anspruch 1 oder 2, **dadurch gekennzeichnet, dass** der Dichtkörper (12) ein Haltelement (26) aufweist, welches die erste Seite (32) des Dichtelementes (24) umgreift.

4. Sicherheitsventil nach einem der vorangehenden Ansprüche, **dadurch gekennzeichnet, dass** der Druckkanal (40) im Halteelement (26) und/oder im Dichtelement (24) ausgebildet ist.

5. Sicherheitsventil nach einem der vorhergehenden Ansprüche, **dadurch gekennzeichnet, dass** der Dichtkörper (12) eine in Richtung des Ventilsitzes (8) geöffnete Ausnehmung (18) aufweist, in welcher das Dichtelement (24) und/oder das Halteelement (26) angeordnet sind.

6. Sicherheitsventil nach einem der vorhergehenden Ansprüche, **dadurch gekennzeichnet, dass** ein Druckraum (38) zwischen der Druckfläche des Dichtelements (24) und einer der Druckfläche gegenüberliegenden, ersten Fläche (36) des Dichtkörpers (12) ausgebildet ist, wobei der Druckraum (38) über den Druckkanal (40) mit dem Druckbereich (4) innerhalb des Ventilsitzes (2) verbunden ist.

7. Sicherheitsventil nach einem der vorhergehenden Ansprüche, **dadurch gekennzeichnet, dass** die Druckfläche des Dichtelements (12) in Richtung quer zu der ersten Achse (x) eine größere Oberfläche (A₊) als eine im geschlossenen Zustand des Sicherheitsventils vom Ventilsitz (8) umschlossene Teilfläche (A₋) der ersten Seite (32) des Dichtelements (24) aufweist.

8. Sicherheitsventil nach einem der vorhergehenden Ansprüche, **dadurch gekennzeichnet, dass** die Auflagefläche (10) innerhalb oder außerhalb des Ventilsitzes (8) ausgebildet ist.

9. Sicherheitsventil nach Anspruch 8, **dadurch gekennzeichnet, dass** die Auflagefläche (10) den Ventilsitz (8) umfänglich umgibt und vorzugsweise einstückig mit diesem ausgebildet ist.

10. Sicherheitsventil nach einem der vorhergehenden Ansprüche, **dadurch gekennzeichnet, dass** entlang eines Außenumfangs der Druckfläche (A_{D}) ein bevorzugt elastisches Dichtmittel (30, 30') zwischen dem Dichtelement (24) und dem Dichtkörper (12) angeordnet ist.

11. Sicherheitsventil nach Anspruch 10, **dadurch gekennzeichnet, dass** das Dichtelement (24, 24') und das Dichtmittel (30, 30') einstückig ausgebildet sind.

12. Sicherheitsventil nach Anspruch 11, **dadurch gekennzeichnet, dass** das Dichtmittel (30, 30') in einer Nut (28) angeordnet ist, welche umfänglich zur ersten Achse (x) am Außenumfang des Dichtelements (24) ausgebildet ist.

13. Sicherheitsventil nach einem der vorhergehenden Ansprüche, **dadurch gekennzeichnet, dass** das Dichtmittel (30, 30') in einer Nut (28) angeordnet ist, welche umfänglich zur ersten Achse X an einem Innenumfang des Dichtkörpers (12) ausgebildet ist.

14. Sicherheitsventil nach einem der vorhergehenden Ansprüche, **dadurch gekennzeichnet, dass** das Dichtelement (24) aus einem elastischen oder metallischen Material gebildet ist.

## Claims

1. A safety valve with a valve seat (8) and with a sealing body (12) which is movable relative to the valve seat (8) along a first axis (X) and which is biased with a holding force (F_{H}) along this first axis (X) in the direction of the valve seat (8),
wherein a sealing element (24) is arranged on the sealing body (12) in a manner such that with a first side (32) it can be brought into sealing contact with the valve seat (8),
a pressure surface which is situated on a second side (34) of the sealing element (24) which is opposite to the first side (32) of the sealing element (24) is connected via at least one pressure channel (40) to a pressure region which is surrounded by the valve seat, and
a contact surface (25) is arranged on the sealing body (12), said contact surface coming to bear on a rest surface (10) in the closed condition of the safety valve, **characterised in that** the sealing element (24) is movable relative to the sealing body (12) along the first axis (x).

2. A safety valve according to claim 1, **characterised in that** the sealing body (12) comprises at least one contact element, on which the contact surface (25) is formed.

3. A safety valve according to claim 1 or 2, **characterised in that** the sealing body (12) comprises a holding element (26) which encompasses the first side (32) of the sealing element (24).

4. A safety valve according to one of the preceding claims, **characterised in that** the pressure channel (40) is formed in the holding element (26) and/or in the sealing element (24).

5. A safety valve according to one of the preceding claims, **characterised in that** the sealing body (12) comprises a recess (18) which is open in the direction of the valve seat (8) and in which the sealing element (24) and/or the holding element (26) are arranged.

6. A safety valve according to one of the preceding claims, **characterised in that** a pressure space (38) is formed between the pressure surface of the sealing element (24) and a first surface (36) of the sealing body (12) which lies opposite the pressure surface, wherein the pressure space (38) is connected via the pressure channel (40) to the pressure region (4) within the valve seat (2).

7. A safety valve according to one of the preceding claims, **characterised in that** the pressure surface of the sealing element (12) in the direction transverse to the first axis (X) has a larger surface (A₊) than a part-surface (A₋) of the first side (32) of the sealing element (24), said part-surface being enclosed by the valve seat (8) in the closed condition of the safety valve.

8. A safety valve according to one of the preceding claims, **characterised in that** the rest surface (10) is formed within or outside the valve seat (8).

9. A safety valve according to claim 8, **characterised in that** the rest surface (10) peripherally surrounds the valve seat (8) and is preferably designed as one piece with this.

10. A safety valve according to one of the preceding claims, **characterised in that** a preferably elastic sealing means (30, 30') is arranged between the sealing element (24) and the sealing body (12), along an outer periphery of the pressure surface (A_{D}).

11. A safety valve according to claim 10, **characterised in that** the sealing element (24, 24') and the sealing means (30, 30') are designed as one piece.

12. A safety valve according to claim 11, **characterised in that** the sealing means (30, 30') is arranged in a groove (28) which is formed peripherally to the first axis (X) on the outer periphery of the sealing element (24).

13. A safety valve according to one of the preceding claims, **characterised in that** the sealing means (30, 30') is arranged in a groove (28) which is formed peripherally to the first axis (X) on an inner periphery of the sealing body (12).

14. A safety valve according to one of the preceding claims, **characterised in that** the sealing element (24) is formed from an elastic or metallic material.

## Revendications

1. Soupape de sécurité comportant un siège de soupape (8) et un corps d'étanchéité (12) mobile par rapport au siège de soupape (8) le long d'un premier axe (x) et précontraint le long de ce premier axe (x) en direction du siège de soupape (8) selon une force de retenue (F_{H}), dans laquelle
un élément d'étanchéité (24) est agencé au niveau du corps d'étanchéité (12) de façon telle qu'il peut être mis en appui de manière étanche avec le siège de soupape (8) par un premier côté (32),
une surface de pression, située au niveau d'un deuxième côté (34) de l'élément d'étanchéité (24) opposé au premier côté (32) de l'élément d'étanchéité (24), est reliée à une zone de pression entourée par le siège de soupape par le biais d'au moins un canal de pression (40), et
une surface d'appui (25) est agencée au niveau du corps d'étanchéité (12), laquelle s'appuie sur une surface d'application (10) à l'état fermé de la soupape de sécurité, **caractérisée en ce que** l'élément d'étanchéité (24) est mobile par rapport au corps d'étanchéité (12) le long du premier axe (x).

2. Soupape de sécurité selon la revendication 1, **caractérisée en ce que** le corps d'étanchéité (12) présente au moins un élément d'appui, au niveau duquel la surface d'appui (25) est réalisée.

3. Soupape de sécurité selon la revendication 1 ou 2, **caractérisée en ce que** le corps d'étanchéité (12) présente un élément de retenue (26) qui entoure le premier côté (32) de l'élément d'étanchéité (24).

4. Soupape de sécurité selon l'une des revendications précédentes, **caractérisée en ce que** le canal de pression (40) est réalisé dans l'élément de retenue (26) et/ou dans l'élément d'étanchéité (24).

5. Soupape de sécurité selon l'une des revendications précédentes, **caractérisée en ce que** le corps d'étanchéité (12) présente un évidement (18) ouvert en direction du siège de soupape (8), dans lequel sont agencés l'élément d'étanchéité (24) et/ou l'élément de retenue (26).

6. Soupape de sécurité selon l'une des revendications précédentes, **caractérisée en ce qu'**un espace de pression (38) est réalisé entre la surface de pression de l'élément d'étanchéité (24) et une première surface (36) du corps d'étanchéité (12) opposée à la surface de pression, dans laquelle l'espace de pression (38) est relié à la zone de pression (4) à l'intérieur du siège de soupape (2) par le biais du canal de pression (40).

7. Soupape de sécurité selon l'une des revendications précédentes, **caractérisée en ce que** la surface de pression de l'élément d'étanchéité (12) présente, dans la direction transversale au premier axe (x), une surface (A₊) plus grande qu'une surface partielle (A₋) du premier côté (32) de l'élément d'étanchéité (24) entourée par le siège de soupape (8) à l'état fermé de la soupape de sécurité.

8. Soupape de sécurité selon l'une des revendications précédentes, **caractérisée en ce que** la surface d'application (10) est réalisée à l'intérieur ou à l'extérieur du siège de soupape (8).

9. Soupape de sécurité selon la revendication 8, **caractérisée en ce que** la surface d'application (10) entoure circonférentiellement le siège de soupape (8) et **en ce qu'**elle est réalisée de préférence d'un seul tenant avec celui-ci.

10. Soupape de sécurité selon l'une des revendications précédentes, **caractérisée en ce qu'**un moyen d'étanchéité de préférence élastique (30, 30') est agencé le long d'une circonférence extérieure de la surface de pression (A_{D}) entre l'élément d'étanchéité (24) et le corps d'étanchéité (12).

11. Soupape de sécurité selon la revendication 10, **caractérisée en ce que** l'élément d'étanchéité (24, 24') et le moyen d'étanchéité (30, 30') sont réalisés d'un seul tenant.

12. Soupape de sécurité selon la revendication 11, **caractérisée en ce que** le moyen d'étanchéité (30, 30') est agencé dans une rainure (28) qui est réalisée circonférentiellement par rapport au premier axe (x) au niveau de la circonférence extérieure de l'élément d'étanchéité (24).

13. Soupape de sécurité selon l'une des revendications précédentes, **caractérisée en ce que** le moyen d'étanchéité (30, 30') est agencé dans une rainure (28) qui est réalisée circonférentiellement par rapport au premier axe X au niveau d'une circonférence intérieure du corps d'étanchéité (12).

14. Soupape de sécurité selon l'une des revendications précédentes, **caractérisée en ce que** l'élément d'étanchéité (24) est formé d'un matériau élastique ou métallique.
